# EUROPÄISCHE PATENTSCHRIFT

(11) **EP 1 940 220 B1**
(45) Veröffentlichungstag und Bekanntmachung des Hinweises auf die Patenterteilung: **30.12.2009**
(21) Anmeldenummer: 06819095.8
(22) Anmeldetag: 18.10.2006
(51) Int. Cl.: A01K 27/00, B60R 22/10

(54) **BRUSTGESCHIRR FÜR TIERE**
BREAST HARNESS FOR ANIMALS
HARNAIS POUR ANIMAUX

(30) Priorität: 21.10.2005 DE 202005016645 U; 10.11.2005 DE 202005017519 U; 22.09.2006 DE 202006014750 U
(43) Veröffentlichungstag der Anmeldung: 09.07.2008
(73) Patentinhaber: Dittmann Products GmbH, 97509 Lindach (DE)
(72) Erfinder: DITTMANN, Franz, 97509 Lindach (DE)
(74) Vertreter: Pröll, Jürgen
(86) Internationale Anmeldenummer: PCT/EP2006/067535
(87) Internationale Veröffentlichungsnummer: WO 2007/045667

(56) Entgegenhaltungen:
- EP-A- 1 342 631
- GB-A- 2 395 885
- US-A- 1 614 083
- US-A- 5 915 335

## Beschreibung

Die Erfindung betrifft ein Brustgeschirr für Tiere, insbesondere für Hunde, mit den im Oberbegriff des Anspruches 1 angegebenen Merkmalen.

Aus der DE 203 06 653 U1 bzw. US 5,915,335 ist ein gattungsgemäßes Brustgeschirr mit mindestens einem vor den Vorderbeinen eines Tieres, insbesondere eines Hundes, um die Brust verlaufenden ersten Brustgurt und einem hinter den Vorderbeinen verlaufenden zweiten Brustgurt bekannt. Die Brustgurte sind längs des Brustbeines des Tieres über einen Verbindungsgurt miteinander verbunden. Die Brustgurte können auch sich über dem Brustbein vor den Vorderbeinen kreuzend angeordnet und mit ihren Enden jeweils paarweise an plattenförmigen Verbindungselementen mit mindestens zwei gegeneinander in Längsrichtung versetzten Ausnehmungen befestigt sein. Die Enden des vorderen Brustgurtes sind durch die vorderen Ausnehmungen und die Enden des hinteren Brustgurtes durch hintere Ausnehmungen in den Verbindungselementen hindurchgesteckt und hieran längenverstellbar oder, z. B. in Schlaufenform ausgebildet, nicht längenverstellbar befestigt. Bei den gekreuzten Brustgurten sind die vorderen Enden in die vorderen Ausnehmungen und die hinteren Enden in die hinteren Ausnehmungen eingefügt und hieran in Längsrichtung verstellbar oder in Schlaufenform ausgebildet befestigt. Die plattenförmigen Verbindungselemente sind als unmittelbar miteinander verbindbare Schlosselemente ausgebildet, die durch einen Steck-, Rast- oder einen Riegel- oder Drehriegelverschluss miteinander lösbar auf dem Rücken des Tieres im Bereich des Halsansatzes gesichert zusammenfügbar sind. Die Brustgurte, die an den vorderen Ausnehmungen der Verbindungselemente befestigt sind, sind im Endabschnittbereich mit Schlosszungen bzw. Aufsteckschlosssystemen oder -ösen für die Befestigung mindestens eines Sicherungsgurtes zur Fixierung an einem Fixpunkt in einem Kraftfahrzeug oder an einem Sitz in einem Kraftfahrzeug ausgestattet.

Ein Brustgeschirr der gattungsgemäßen Art ist auch aus der DE 42 35 782 C2 bekannt. Die zwei plattenförmigen Verbindungselemente weisen dabei jeweils drei Ausnehmungen auf, wobei der vordere und der hintere Brustriemen jeweils paarig durch die Ausnehmungen in den Verbindungselementen gezogen und entweder zu Schlaufen vernäht oder durch Umlenk-Einstellmittel in der Länge verstellbar geführt sind. Die dritten Ausnehmungen dienen zur Befestigung zweier Verbindungsgurte, die über Ösen oder alternativ über Steckschlossverbinder miteinander verbindbar sind. Durch die Ösen kann ein Führungsriemen bzw. eine Hundeleine gezogen oder hieran befestigt werden oder beide Ösen können mittels Karabinerhaken miteinander verbunden werden, der sich an einer Führungsleine oder an einem Führungsriemen befindet. Die hier zur Anwendung kommende Verbindung der beiden Verbindungselemente ist sehr aufwendig.

Aus der EP 1 038 434 B1 ist ein Brustgeschirr für Hunde bekannt, das ähnlich aufgebaut ist wie die vorher beschriebenen. Lediglich werden an Stelle von Verbindungselementen mit Ausnehmungen zur Aufnahme der Gurtenden hier Ösen verwendet und die Ösen durch längenverstellbare Gurte mit Schlosssystemen verbunden. Auch diese Verbindungsart ist äußerst komplex und aufwendig.

Aus der DE 201 00 189 U1 ist ein Sicherheitsgurtsystem mit Isofixkonnektoren für Hunde bekannt, um einen Hund au Fixpunkten am Sitz eines Kraftfahrzeuges sichern zu können.

Aus der DE 100 47 626 A1 ist ferner eine Anschnalleinrichtung für Hunde in einem Kraftfahrzeug bekannt. Der Hund trägt ein Brustgeschirr mit obenseitiger Ring-Öse, an der ein Riemen mittels Karabinerhaken befestigbar ist. Dieser Sicherungsgurt wird mit dem anderen Ende an einem Fixpunkt, z. B. einem Befestigungsbügel eines Isofixverbinders, am Sitz befestigt. Ein ähnliches Brustgeschirr ist aus der DE 42 35 782 C2 bekannt.

Des weiteren ist aus der DE 101 60 783 A1 ein Brustgeschirr bekannt, bei dem zwei Brustgurte vorgesehen sind, die über das Brustbein sich kreuzend verlegt und deren Enden an der Oberseite am Rücken des Tieres über einen Längsgurt miteinander verbunden sind. Diese Schrift gibt eine alternative Verlegung des Brustgeschirrs gemäß der DE 42 35 782 C2 an, die auch auf den vorliegenden Erfindungsgegenstand anwendbar sein soll.

Es hat sich erwiesen, dass die bekannten Brustgeschirre den Nachteil aufweisen, dass insbesondere bei einem Seitencrash bei einem Fahrzeug, bei dem der Hund auf dem Fahrzeugrücksitz mittels des Brustgeschirrs über Sicherungsgurte an Fixpunkten fixiert ist, Verletzungen auftreten können.

Es liegt deshalb der Erfindung die Aufgabe zugrunde, den gattungsgemäßen Gurt dahingehend weiterzubilden, dass die Verletzungsgefahr des Tieres auch bei Seitenaufprall nahezu ausgeschlossen ist und bei einem Auffahrunfall ein besserer Schutz des Brustbeines und des Brustkorbes sowie eine bessere Kraftverteilung gegeben sind.

Gelöst wird die Aufgabe durch Ausgestaltung des Brustgeschirrs gemäß der im Anspruch 1 angegebenen technischen Lehre.

Das Brustgeschirr nach der Erfindung weist zwei Verbindungsgurte auf, die im Wesentlichen beidseitig des Brustbeines in etwa parallel verlaufend angeordnet sind. Die beiden Verbindungsgurte sind zur Abstandsbildung durch einen oberen und einen unteren querverlaufenden Querverbindungssteg miteinander verbunden und bilden so gewissermaßen einen Hosenträgergurt.

Es hat sich gezeigt, dass ein Hund, der mit einem Brustgeschirr gemäß der Erfindung an zwei Fixpunkten der Rückenlehne eines Kraftfahrzeugrücksitzes gesichert gehalten ist, im Falle eines Auffahrunfalls oder eines Seitencrashs derart gesichert gehalten ist, dass keine Verletzungen des Brustbeines gegeben sind und eine großflächige Zugkraftverteilung über den Brustkörper verteilt erfolgt. Zum Zwecke der Rückhaltung sind die Ösen an den Enden der Längsgurte, die sich seitlich am Brustkorb außen befinden und sich von vorne nach hinten bis in Höhe des hinteren Brustgurtes erstrecken, über Sicherungsgurte an den vorhandenen Schlosssystemen am Kfz-Sitz für den Fahrzeugsicherheitsgurt oder an Fixpunkten bzw. Querbolzen eines Isofixsystems am Sitz oder an der umgebenden Karosserie gesichert gehalten. Die querverlaufenden Bruststege können in einfachster Ausführung aus Quergurten bestehen, die fest angenäht sind. Diese Distanzbildung empfiehlt sich in jedem Fall beim unteren Gurt. Beim Hals-/Brustgurt hingegen empfiehlt es sich an Stelle eines einfachen Gurtes als Brückenglied an einem Quergurt seitlich Ringösen, insbesondere solche mit D-Ausprägung oder dreieckförmige Ösen, vorzusehen, an denen zum einen die Verbindungsgurte befestigt sind und zum anderen Abstandsgurte, an deren Enden die Längsgurte befestigt sind oder mittels Schlaufen daran befestigt sind. Die Abstandsgurte bilden somit automatisch den Abstand zwischen der Ringöse und dem Ansatz der nach hinten sich erstreckenden Längsgurte. Diese Konstruktion gestattet eine unabhängige Verschiebung des Hals-/Brustgurtes, der durch die Ösen ebenfalls geführt ist. Dieser Hals-/Brustgurt ist einseitig an einem plattenförmigen Verbindungselement mittels einer Schlaufe, die durch eine Ausnehmung gezogen ist, befestigt. Der hintere Brustgurt ist mittels einer Schlaufe an dem Materialsteg des Verbindungselementes befestigt, der durch die hintere Ausnehmung ausgebildet ist. Das andere Ende des Hals-/Brustgurtes ist ebenfalls durch eine Ausnehmung in dem korrespondierenden Verbindungselement durchgeführt. Auf das freie Ende ist ein Stopper in Form eines Umlenkmittels aufgezogen, so dass hierüber die aktive Länge des Hals-/Brustgurtes verändert werden kann. Der Umlenker befindet sich oberhalb der Ausnehmung oder dem Schlitz in dem plattenförmigen Verbindungselement.

An dem unteren Verbindungssteg oder an den Enden der Verbindungsgurte können auch Schlaufen vorgesehen sein, durch die der hintere Brustgurt hindurchgezogen wird. Insbesondere beim Seitencrash werden die Seitenkräfte ausschließlich nur über den Brustgurt und den Hals-/Brustgurt auf die andere Seite übertragen. Die Verbindungsgurte sind praktisch unbeteiligt, wodurch ebenfalls Verletzungen, insbesondere an den Vorderläufen des Tieres bzw. des Hundes, vermieden werden. Die beiden seitlichen Verbindungsgurte, die gewissermaßen parallel zum Brustbein verlaufen, bewirken bei einem Frontalcrash, dass die Kräfte über den gesamten Rippenbereich auf den Körper gedämpft übertragen werden und nicht punktuell auf das Brustbein, so dass auch hier Verletzungen ausgeschlossen werden können.

Der Hals-/Brustgurt kann auch so ausgeführt sein, dass er nach dem Umlegen durch ein oder zwei parallele Ausnehmungen bzw. Schlitze in dem Verbindungselement mit seinem Ende zurückgeführt werden kann. Er kann durch die Öse eines Längsgurtes durchgezogen und an dem übrigen Teil befestigt sein. Die Längsgurte können darüber hinaus durch Abstandsgurte mit den Verbindungselementen verbunden sein, zu welchem Zweck eine weitere Ausnehmung in dem Verbindungselement vorzusehen ist. Diese Abstandsgurte können dann an den Längsgurten angenäht sein. Die Längsgurte, die so zusätzlich gesichert gehalten sind, können auch verschiebbar mittels Schlaufen auf dem Hals-/Brustgurt und/oder auf dem zweiten Brustgurt gelagert sein. Sie können also nicht herunterfallen oder sich unzulässig verschieben.

Des Weiteren kann auch der hintere Brustgurt durch entsprechende Umlenkmittel an seinem Ende auf eine bestimmte Länge eingestellt werden. Das Umlenkmittel greift dabei auf das Verbindungselement auf, so dass auch dieser Gurt gesichert gehalten ist.

Das hier zur Anwendung kommende Schlosssystem, bestehend aus den beiden Verbindungselementen, die mittels Drehriegelverschluss oder federbelastendem Bolzen miteinander verbunden werden, ist aus der DE 203 06 653 bekannt. Dieses Schlosssystem findet hier auch Anwendung, da es besonders einfach und sicher ist und die durchgesteckte Schlosszunge, die die Bohrung zur Aufnahme eines Verriegelungsbolzens aufweist, zusätzlich noch mit Bohrungen versehen sein kann, die zu der Befestigung von Hundeführungsleinen oder anderen Sicherungsleinen dienen können. Andere Schlosssysteme können aber auch zum Einsatz kommen.

Die vorteilhaften Ausbildungen der Erfindung und zusätzliche nützliche Weiterbildungen sind in den Unteransprüchen im Einzelnen angegeben.

Überraschenderweise hat sich gezeigt, dass dann, wenn entsprechend der Erfindung die Parallelnähte nicht linear parallel zueinander verlaufend angeordnet sind, sondern bogenförmig, nämlich kreisbogenförmig oder oval oder auch spiralförmig, aufgrund dynamischer Effekte eine wesentlich höhere Festigkeit der Nähverbindung der Gurtabschnitte gegeben ist. Selbst unter Verwendung schwächeren Nähgarns gegenüber dem von vorbekannten Nähverbindungen ist bei gleichen Belastungen kein Aufreißen solcher Nähverbindungen gegeben. Dies liegt primär daran, dass durch die Bogenführung der Nähte stets mehrere Nahtstellen zugleich belastet werden und damit eine breitere Kraftverteilung gegeben ist als bei Nähverbindungen mit Eckennahtstellen bekannter Art.

In einer Ausführungsform ist ein rundes Nähbild gegeben. Dabei können die Nähte spiralförmig ausgeführt sein. So wird die Naht beispielsweise auf einer Rundnähmaschine von innen beginnend spiralförmig nach außen genäht. Über die Breite des Gurtabschnittes können dabei beispielsweise sechs oder acht Nahtspuren von der Spirale beschrieben werden. Auf diesen Spuren können gleiche oder aber auch unterschiedliche Stichlängen verwendet werden. Das äußere Ende wird dann zweckmäßigerweise wieder nach innen über die Spurnähte vernäht, so dass ein Verbindungsgang nach innen entsteht und damit keine Belastung auf das Ende der Naht ausgeübt wird. Anfang und Ende der Spiralnaht liegen also im inneren Bereich.

Crashtests mit Gurtsystemen, bei welchen solche Nahtbilder verwendet worden sind, haben gezeigt, dass bei gleicher Belastung wie bei Nähbefestigungen mit vorbekannten Zick-Zack-Nähten oder parallelen Nahtbildern kein Aufreißen der Naht gegeben ist. Selbst mit etwas schwächerem Garn, womit eine preiswertere Ausführung realisierbar ist, werden die Sicherheitsvorschriften erfüllt, während der Einsatz von schwächerem Garn bei Nähverbindungen mit herkömmlichen Nähbildern zum Zerreißen der Naht führt.

In weiterer Ausgestaltung des Nähbildes mit einer spiralförmigen Naht kann auch eine weitere Spiralnaht in die Zwischenräume der ersten Naht eingebracht werden. Diese kann sowohl in gleicher als auch in gegenläufiger Richtung verlaufen. Die Enden der Naht können dabei parallel oder z.B. um 180° versetzt angeordnet sein oder aber auch in jeder anderen Winkelposition zueinander.

Weitere durchgeführte Versuche mit kreisrunden und ovalen Nähbildern, bei denen die Nähbahnen völlig parallel zueinander mit Nähmaschinen hergestellt werden, haben gezeigt, dass selbst bei beschränkter Anzahl von Nähten eine hohe Festigkeit der Nähverbindung gegeben ist. Ebenso hat sich gezeigt, dass bei Verwendung von Garnen gleichen Materials mit geringeren Durchmessern gegenüber dem verwendeten Material bei geraden Nähten oder Zick-Zack-Nähten eine höhere Festigkeit realisierbar ist, ohne dass die Nahtverbindung beim Crashtest aufreißt. Die runden oder ovalen Nähte können von innen beginnend nach außen parallel angelegt werden. Das Ende einer Nahtlinie wird durch eine Verbindungsnaht in eine parallele Ebene geführt. Auf dieser Ebene wird dann auf einer Umfangsbahn wiederum die nächste Naht angelegt und so weiter, bis eine ausreichende Anzahl paralleler Nähte gegeben ist. Das Ende wird dann ebenfalls als Verbindungsnaht nach innen geführt. Dadurch werden Anfang und Ende der Naht vollständig entlastet. Die positive Wirkung durch die bogenförmige Anordnung der Nähte auf die Reißfestigkeit ist bereits beschrieben.

Soll nun eine solche Naht zusätzlich verstärkt werden, so kann sie mit einer gleichen Nahtanordnung kombiniert werden. In diesem Fall wird beim Erreichen der äußeren Naht das Garnende um einen Teilsprung der Teilung der Nähte nach innen in einen Verbindungsnahtabschnitt überführt und dann auf der Umfangsbahn eine Zwischennaht eingefügt. Nach diesem Schema kann fortlaufend eine Naht nach der anderen eingefügt werden, bis die letzte im Mittenbereich verläuft. Diese Naht wird am schwächsten belastet, so dass das Ende des Nähgarns völlig entlastet ist, während die maximalen Kräfte primär von der Naht mit dem größten äußeren Umfang aufgefangen werden.

Durch die gewählte relativ kurze Stichlänge ist ersichtlich, dass die Kräfte vollständig aufgefangen werden, die bei einem Crash oder auch bei jeder anderen stärkeren Belastung (z.B. starkes Abbremsen) entstehen. Die Verbindungsnähte können bei einer solchen Anordnung parallel bzw. radial parallel oder aber auch im Winkel versetzt zueinander verlaufen. Ebenso können beispielsweise drei, vier Nahtpaare oder ein mehrfaches davon eine Nähverbindung bilden.

Des Weiteren können auch die Verbindungsgurte in ihrer Länge verstellbar ausgeführt sein, zu welchem Zweck ebenfalls bekannte Laschen mit Umlenkmitteln zum Einsatz kommen.

Die Erfindung wird nachfolgend anhand eines in den Zeichnungen dargestellten Ausführungsbeispiels ergänzend erläutert.

In der Zeichnung zeigen:
- FIG 1: ein ausgebreitetes Brustgeschirr nach der Erfindung,
- FIG 2: ein Nähbild der Nähte zweier miteinander verbundener Gurte oder Gurtenden und
- FIG 3: eine Nahtanordnung mit ineinander verschachtel- ten kreisförmigen Nähten.

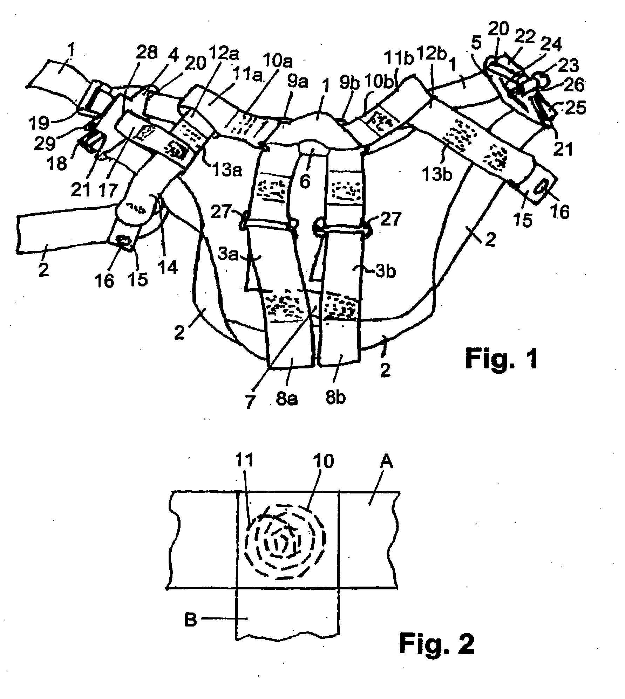

Das Ausführungsbeispiel in Figur 1 zeigt ein Brustgeschirr, bestehend aus einem Hals-/Brustgurt 1, der mit einer Schlaufe 22, die angenäht ist, an einem plattenförmigen Verbindungselement 5 und zwar durch eine vordere Ausnehmung 20 durchgezogen befestigt ist. Der Gurt ist sodann durch zwei Ringösen 9a und 9b eines Querverbindungsstegs 6 gezogen und mit seinem zweiten Ende durch die Ausnehmung 20 in dem zweiten Verbindungselement 4 hindurch gesteckt. Um diesen Gurt 1 in der Länge verstellen zu können, ist eine Längenverstellvorrichtung in Form eines Umlenkmittels 19 vorgesehen, durch das der Gurt um 360° umgelenkt und selbsthemmend oder durch Verschiebungselemente einklemmbar ist. Beide Verbindungselemente 4 und 5 weisen weiterhin hintere Ausnehmungen 21 auf.

Beim rechten Verbindungselement 5 ist durch diese Ausnehmung die Schlaufe 25 eines Brustgurtes 2 hindurch gezogen. Auch diese Schlaufe 25 ist durch Vernähen des Gurtendes an dem Gurt 2 gebildet. Der Gurt 2 ist weiterhin durch Schlaufen 8a und 8b der beiden, eine doppelte Brustführung bewirkenden, Verbindungsgurte 3a und 3b hindurch geführt und durch die Ausnehmung 21 gesteckt. Zur Längenverstellung ist auch hier ein Umlenkmittel 18 beschriebener Art eingesetzt, um das Brustgeschirr an die Größe des Tieres, bzw. an die des Hundes, anpassen zu können. Durch die D-fömig ausgebildeten Ringösen 9a und 9b, die an dem Querverbindungssteg 6, der aus Gurtmaterial besteht, befestigt sind, sind ferner die Verbindungsgurte 3a und 3b mit Schlaufen befestigt. Es handelt sich hierbei um längenverstellbare Gurte. Der obere Gurtabschnitt ist deshalb untenseitig jeweils mit einer Schlaufe versehen, an der ein Gurtversteller 27 befestigt ist, durch den das jeweilige Ende der unteren Gurtabschnitte 3a und 3b umgelenkt und klemmend oder durch Reibung befestigt ist. Es handelt sich dabei um bekannte Gurtversteller, um die Länge des Gurtes einstellen zu können. Untenseitig sind die Verbindungsgurte 3a und 3b über einen Querverbindungssteg 7 in Form eines Gurtes miteinander verbunden. Der Querverbindungssteg 7 ist ebenfalls angenäht. Die beiden Verbindungsgurte 3a und 3b werden durch die Querverbindungsstege 6 und 7 seitlich am Brustbein des Tieres entlang geführt, so dass eine Kraftverteilung auf die Rippen des Tieres beim Aufprall oder bei einem Seitencrash erfolgt. Damit das Tier z.B. auf dem Rücksitz eines Kraftfahrzeuges gesichert gehalten ist, sind an den Ringösen 9a und 9b ferner Abstandsgurte 10a und 10b mittels Schlaufen befestigt. Diese weisen ebenfalls Halteschlaufen 11a und 11b für eingezogene Längsgurte 13a und 13 b auf. Diese sind ebenfalls durch Schlaufen 12a und 12b in den Schlaufen 11a und 11b gewissermaßen eingehängt. Der rechte Längsgurt 13b ist an dem Brustgurt 2 angenäht und weist rückseitig vorstehend eine Lasche 15 mit einer Öse 16 auf. Diese Lasche 15 besteht beispielsweise aus Metall. Sie ist mittels Schlaufenbefestigung am Längsgurt 13b befestigt. In die Öse kann beispielsweise ein Karabinerhaken eines Verbindungssicherungsgurtes eingehängt werden, der mit seinem anderen Ende mittels einer Schlosszunge in einem Schlosssystem eines Sicherheitsgurtes des Fahrzeuges eingesteckt und darin gesichert gehalten werden kann. Es können aber auch an einem solchen Verbindungsgurt andere Schlosssysteme befestigt sein, um eine Befestigung an Isofixpunkten, nämlich an Querbolzen, die im Polster des Rücksitzes des Fahrzeuges versenkt angebracht sind, zu ermöglichen. Die Abstandsgurte 10a und 10b haben zusätzlich die wichtige Aufgabe der direkten Kraftübertragung auf die seitlichen Gurtführungen, nämlich der Schlaufen 12a und 12b.

Auf der linken Seite ist ebenfalls ein Längsgurt 13a vorgesehen. Dieser ist aber nicht am Brustgurt 2 angenäht, sondern lose darauf mittels einer Schlaufe 14 geführt. Um einen Abstand zu dem Verbindungselement 4 herzustellen, ist hier ein Abstandsgurt 17 zwischengefügt, der an dem Längsgurt 13a angenäht und mittels einer Schlaufe, die durch eine Ausnehmung 28 in dem Verbindungselement 4 geführt ist, befestigt. Auch dieser Längsgurt 13a weist eine Lasche 15 mit Öse auf, die in gleicher Weise mit einem Verbindungssicherungsgurt verbunden werden kann, wie an der anderen Seite des Brustgeschirrs. Durch die gleitende Lagerung des Längsgurtes 13a sowohl auf dem Brustgurt 2 als auch in der Schlaufe 11a mit der Schlaufe 12a an dem Abstandsgurt 10a ist ein Längenausgleich beim Befestigen an den Fixpunkten des Rücksitzes des Fahrzeuges auf einfache Weise gewährleistet. Durch die Verlängerungsmöglichkeiten des Hals-/Brustgurtes 1 und des Brustgurtes 2 sowie der Verbindungsgurte 3a und 3b ist eine Anpassung der Größe des Brustgeschirres an die Größe des Hundes auf einfache Weise möglich. Durch die großen Auflageflächen, die durch die Verbindungsgurte 3a und 3b gegeben sind, ist ein sehr geringes Verletzungsrisiko des Hundes gegeben. Zusätzlich können noch Brustpolster-Pads aufgezogen werden, um Druckbelastungen zu dämpfen. Solche Brustpolster-Pads sind bekannt.

Das Verbindungselement 4 weist einen Abwinklungsteil 29 auf. Beim Umschnallen des Brustgeschirrs werden zunächst die Vorderbeine des Tieres in die von den Abstandsgurten 10a und 10b, dem Gurtabschnitt des Brustgurtes 2 und den Verbindungsgurten 3a und 3b und den Längsgurten 13a und 13b begrenzten Felder hineingestellt. Das Geschirr wird dann nach oben angehoben und die beiden Verbindungselemente zusammengefügt. Dies geschieht in der Weise, dass das Abwinklungsteil 29 von unten durch den Längsschlitz 24 des zweiten Verbindungselementes 5 eingesteckt wird. Zuvor muss der Querbolzen 26 durch Betätigen des Zugknopfes 23 gegen die Kraft einer Feder zurückgezogen werden. Nach dem Durchstecken des Abwinklungsteils greift der Querbolzen 26 beim Loslassen des Zugknopfes 23 automatisch in eine nicht dargestellte Bohrung in dem Abwinklungsteil 29 und sichert das Verbindungselement 4 an dem Verbindungselement 5. An dem Abwinklungsteil können weitere Bohrungen, beispielsweise zur Befestigung einer Führungsleine für den Hund, vorgesehen sein. Die Längeneinstellungen können dann so vorgenommen werden, dass das Brustgeschirr am Körper des Hundes anliegt. Als vorteilhaft hat es sich erwiesen, den Verbindungsgurt 6 so lang auszubilden, dass die Längsgurte 3a, 3b vom vorderen Halsgurt 1 ausgehend mit dem Halsgurt ein Dreieck bilden, wodurch eine große Fläche zum Rückhalt einer Kraftbelastung entsteht. Auch kann der Querverbindungssteg 7 so lang ausgebildet sein, dass eine günstige Druckkraftverteilung auf die beiden Seiten des Brustkörpers des Tieres erfolgt.

Bei Crashtests hat sich erwiesen, dass Zick-Zack-Nähte beim Verbinden der Gurte oder zur Bildung der Schlaufen unter Umständen zum Ausreißen und zum Reißen der Verbindungsgarne führen können. Dieses wird vermieden, wenn ein rundes Nähbild, nämlich ein spiralförmiges Nähbild gewählt wird, wie dies aus Figur 2 ersichtlich ist. Hierbei handelt es sich um eine spiralförmig angelegte Naht, die vom Zentrum aus beginnend im Verbindungsbereich angelegt wird. Die äußeren Enden werden dann einfach wieder in die Mitte hinein gelegt. Es ist ersichtlich, dass insbesondere in äußeren Bereichen stets die auftreffenden Kräfte durch mindestens zwei Durchstiche, also Garnabschnitte, geteilt werden und dadurch hohe Spitzenbelastung weitestgehend vermieden wird.

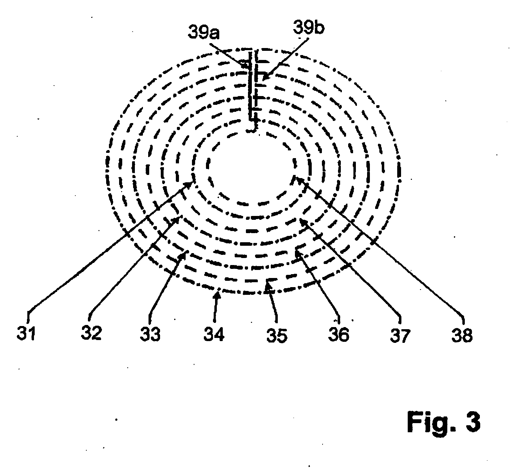

Figur 3 zeigt ein Beispiel aus verschachtelt ineinander gefügten kreisrunden Nähten, die an die Stelle der in Figur 2 dargestellten spiralförmigen Nahtanordnung treten können. Der Start vom Fadenanfang erfolgt am inneren Punkt des Verbindungsgangs bzw. der Verbindungsnaht 39a auf der ersten Naht 31, die strichpunktiert eingezeichnet ist. Mit der Nähmaschine wird diese Naht 31 kreisförmig genäht. Anschließend erfolgt der Weg nach außen über den Verbindungsgang 39a durch Einbringen eines oder mehrerer Nahtstiche radial zur zweiten kreisförmigen Naht 32, die ebenfalls strichpunktiert eingezeichnet ist. Ist diese Naht mit der Maschine angelegt, so erfolgt wiederum ein Sprung nach außen durch Einbringung eines weiteren Verbindungsnahtabschnittes in den Verbindungsgang 39a zur Naht 33. Ist diese Naht 33 erstellt, so erfolgt ein weiterer Sprung nach außen über den Verbindungsgang 39a durch eine Verbindungsnaht zur Bildung der äußeren vierten Naht 34 dieser Nahtanordnung.

Bei dieser Ausführung besteht nun die Besonderheit darin, dass das Ende des Garnes nicht direkt wieder als Verbindungsnaht 39b in das Zentrum hineingenäht wird, sondern dass in einer Halbsprungteilung eine Verbindungsnaht in den Verbindungsgang 39b eingebracht wird, um auf die zwischen den Nähten 34 und 33 liegende Zone zu gelangen, um eine Zwischennaht 35 einzubringen. Ist diese Zwischennaht 35 eingebracht, so erfolgt wiederum ein Teilsprung in dem Verbindungsgang 39b durch eine Verbindungsnaht nach innen, um die Zwischennaht 36 in den nächsten Zwischenraum der benachbarten Nähte 33 und 32 einbringen zu können. Dem folgt in einem weiteren Schritt die Einbringung der Naht 37 in den Zwischenraum zwischen Naht 32 und 31. Nach Einbringen dieser Naht 37 wird wiederum am Verbindungsgang 39b eine Verbindungsteilnaht ins Innere gelegt und der Anfang der Innennaht 38 definiert und die Innennaht 38 genäht. Es entstehen also jeweils vier Nahtpaare, die ineinander verschachtelt sind. Das Fadenende wird im inneren Bereich des Verbindungsganges zwischen der achten und der ersten Naht vernäht.

Es ist ersichtlich, dass beide Ausführungsbeispiele einen dynamischen Effekt bei Belastungen bewirken und sich die auf die Nahtverbindung auftreffenden Kräfte über die bogenförmigen Nähte verteilen. Deshalb sind derartige Nahtanordnungen bei Gurten wesentlich höher belastbar als solche, die aus zick-zack-förmigen oder aus geradlinigen Nähbildern bestehen. Die Art der Verbindung kann sowohl bei schmalen Gurten, beispielsweise bei 2 cm breiten Gurten als auch bei breiteren Gurten, die ca. 5 cm breit sind oder mehr, angewendet werden.

Durchgeführte Crashtests haben gezeigt, dass durch Verwendung eines solchen Brustgeschirrs zur Sicherung eines Hundes auf einem Fahrzeugsitz, insbesondere eines Rücksitzes, keine Verletzungen zu befürchten sind, auch dann nicht, wenn starke Kraftbelastungen in Folge eines Auffahrunfalls oder Seitencrashs gegeben sind.

### Bezugszeichenliste:

- 1: Hals/Brustgurt
- 2: Brustgurt
- 3a, 3b: Verbindungsgurte
- 4, 5: Verbindungselement
- 6, 7: Querverbindungssteg
- 8a, 8b: Schlaufen
- 9a, 9b: Ringösen
- 10a, 10b: Abstandsgurte
- 11a, 11b: Halteschlaufen
- 12a, 12b: Schlaufen
- 13a, 13b: Längsgurte
- 14: Schlaufe
- 15: Lasche
- 16: Öse
- 17: Abstandsgurt
- 18, 19: Umlenkmittel
- 20: Ausnehmung (vordere)
- 21: Ausnehmung (hintere)
- 22: Schlaufe
- 23: Zugknopf
- 24: Längsschlitz
- 25: Schlaufe
- 26: Querbolzen
- 27: Gurtversteller
- 28: Ausnehmung
- 29: Abwinklungsteil

- 31, 32, 33, 34: Nähte
- 35, 36, 37, 38, 40: Nähte
- 39a, 39b: Verbindungsnähte

## Patentansprüche

1. Brustgeschirr für Tiere, insbesondere für Hunde, mit mindestens einem Hals/Brustgurt (1) und einem hinter den Vorderbeinen quer über das Brustbein verlaufenden Brustgurt (2), welcher Hals/Brustgurt (1) mit dem Brustgurt (2) über einen längs über das Brustbein verlaufenden Verbindungsgurt (3a, 3b) verbunden ist und mit den Enden jeweils paarweise an plattenförmigen Verbindungselementen (4, 5) mit mindestens jeweils hintereinander angeordneten Ausnehmungen (20, 21) befestigt ist, wobei die Enden des Hals/Brustgurtes (1) in oder an den vorderen Ausnehmungen (20) und die Enden des Brustgurtes (2) in den hinteren Ausnehmungen (21) durchgesteckt und hieran längenverstellbar oder mit Schlaufen befestigt und die plattenförmigen Verbindungselemente (4, 5) auf dem Rücken des Tieres miteinander verbindbar sind, **dadurch gekennzeichnet, dass** zwei Verbindungsgurte (3a, 3b) im Wesentlichen beidseitig des Brustbeines und längs hierzu verlaufend vorgesehen und durch mindestens einen oberen und einen unteren querverlaufenden Querverbindungssteg (6, 7) miteinander verbunden sind.

2. Brustgeschirr nach Anspruch 1, **dadurch gekennzeichnet, dass** an dem unteren Querverbindungssteg (7) eine Schlaufe oder an den Enden der beiden Verbindungsgurte (3a, 3b) unten Schlaufen (8a, 8b) vorgesehen sind, in denen der Brustgurt (2) verschiebbar gelagert ist.

3. Brustgeschirr nach Anspruch 1, **dadurch gekennzeichnet, dass** der obere Querverbindungssteg (6) aus Gurtmaterial hergestellt ist und seitlich zwei nach außen vorstehende Ringösen (9a, 9b), vorzugsweise D-förmig ausgeformte Ringösen, aufweist und dass durch die Ringösen (9a, 9b) der Hals/Brustgurt (1) geführt ist.

4. Brustgeschirr nach Anspruch 1, **dadurch gekennzeichnet, dass** der Hals/Brustgurt (1) und/oder der Brustgurt (2) und/oder die beiden Verbindungsgurte (3a, 3b) nach Art eines Hosenträgergurtes in der Länge verstellbar ausgeführt sind.

5. Brustgeschirr nach Anspruch 1 oder 3, **dadurch gekennzeichnet, dass** an dem oberen Querverbindungssteg (6) oder an den Ringösen (9a, 9b) oder an dem Hals/Brustgurt (1) seitlich am Bruststeg (6) Abstandsgurte (10a, 10b), vorzugsweise mit Halteschlaufen (11a, 11b) versehen, befestigt sind, in oder an denen Längsgurte (13a, 13b) befestigt oder mit Schlaufen (12a, 12b) eingezogen sind, die durch eine weitere Schlaufe (14) verschiebbar oder fest an dem Brustgurt (2) befestigt sind und eine Öse oder Lasche (15) mit Öse (16) zur Befestigung eines Sicherungsgurtes zur Fixierung an Fixpunkten am Kraftfahrzeugsitz, insbesondere an dem Rücksitz eines Personenkraftfahrzeuges, aufweisen.

6. Brustgeschirr nach Anspruch 5, **dadurch gekennzeichnet, dass** einseitig oder beidseitig ein Längsgurt (13a, 13b) vorgesehen ist, die wahlweise zusätzlich durch einen Abstandsgurt (17) an mindestens einer der beiden plattenförmigen Verbindungselemente (4, 5) befestigt sind.

7. Brustgeschirr nach Anspruch 4, **dadurch gekennzeichnet, dass** die Verstelleinrichtungen des Hals/Brustgurtes (1) und/oder des Brustgurtes (2) aus Umlenkmitteln (18, 19) bestehen, die oberhalb der plattenförmigen Verbindungselemente (4, 5) enden.

8. Brustgeschirr nach Anspruch 1, **dadurch gekennzeichnet, dass** die plattenförmigen Verbindungselemente (4, 5) als unmittelbar miteinander verbindbare Schlosselemente ausgebildet sind, die durch einen Steck-, Rast- oder einen Riegel- oder Drehriegelverschluss (23) miteinander lösbar verbunden sind.

9. Brustgeschirr nach Anspruch 8, **dadurch gekennzeichnet, dass** die Verbindungselemente (4, 5) Blechteile oder Formteile aus verstärktem Kunststoff sind, wobei in dem einen Verbindungselement (5) ein Längsschlitz (24) zur Aufnahme eines hochstehenden Abwinklungsteiles am anderen Verbindungselement (4) vorgesehen ist, in welchem ein Lagerloch zur Aufnahme eines Querbolzens (26) des Riegelverschlusses (23) am anderen Verbindungselement (5) vorgesehen ist, und dass in dem hochstehenden Abwinklungsteil weitere Durchbrüche oder Bohrungen zum Befestigen von Hundeleinen oder anderen Gurten vorgesehen sind.

10. Brustgeschirr nach Anspruch 1, **dadurch gekennzeichnet, dass** mindestens an einem der plattenförmigen Verbindungselemente (4, 5) mindestens ein Leuchtkörper oder Lichtreflektor angebracht ist, wobei der Leuchtkörper mindestens eine einschaltbare Signallampe oder eine lichtemittierende Diode ist, die gleichzeitig oder blinkend Licht abgibt und/oder dass an den Gurten Lichtreflektoren oder Leucht- oder Reflektierbänder angebracht sind, und/oder dass an mindestens einem plattenförmigen Verbindungselement (4, 5) ein Utensilienbehälter befestigt ist.

11. Brustgeschirr nach Anspruch 1, **dadurch gekennzeichnet, dass** unter die Verbindungselemente (4, 5) ein Polsterelement gelegt und von mindestens einem durch einen Schlitz hindurch gezogenen Gurt fixiert ist und dass an dem Polster aufklappbar ein Taschenkörper mit einer oder mehreren verschließbaren Taschen befestigt ist, welcher Taschenkörper über die Verbindungselemente (4, 5) legbar und mittels Flächenreißverschlusselemente oder anderer Verbindungsteile an dem Polsterelement befestigbar ist, und/oder dass um die beiden Verbindungsgurte (3a, 3b) ein gegen Druck schützendes Polsterelement gelegt und mittels Verbindungsteile, insbesondere Flächenreißverschlusselemente, fixiert ist.

12. Brustgeschirr nach einem der vorhergehenden Ansprüche, **dadurch gekennzeichnet, dass** die Gurte und/oder Gurtabschnitte zur Herstellung einer festen Verbindung zwischen den Gurten oder zur Bildung von Schlaufen durch Nähte (31, 32, 33, 34, 35, 36, 37, 38, 40) miteinander verbunden sind, die kreis-, oval-, oder spiralförmig verlaufend ausgebildet sind und eine bestimmte Anzahl paralleler oder spiralförmiger Nahtspuren aufweisen.

13. Brustgeschirr nach Anspruch 12, **dadurch gekennzeichnet, dass** in einer kreis-, oval- oder spiralförmigen Anordnung eine weitere gleichförmige Anordnung in die Zwischenräume der Nähte eingefügt ist, wobei mindestens drei kreis- oder ovalförmige Nahtpaare miteinander verschachtelt vorgesehen sind.

14. Brustgeschirr nach Anspruch 12, **dadurch gekennzeichnet, dass** bei spiralförmiger Anordnung die Naht (40) vom Zentrum aus beginnend angelegt ist und das Ende der äußeren Naht als Verbindungsnaht in radialer Richtung die Spiralanordnung durchsetzend nach innen verläuft.

15. Brustgeschirr nach Anspruch 12, **dadurch gekennzeichnet, dass** bei kreis- oder ovalförmiger Anordnung die Nähte (31, 32, 33, 34) nach folgendem Nähbild genäht sind:
a) Naht (31): innenliegend, kreis- oder ovalförmig ausgenäht mit anschließender Verbindungsnaht (39a) in radialer oder seitlicher Richtung nach außen verlaufend,
b) Naht (32): parallel zur 1. Naht verlaufend, wobei eine Verbindungsnaht in Reihe zur 1. Verbindungsnaht (39a) oder versetzt hierzu nach außen verlaufend vorgesehen ist,
c) Naht (33): kreis- oder ovalförmige Naht, parallel zu der 1. und 2. Naht, ohne oder mit weiterer Verbindungsnaht (39a), falls weitere parallele Nähte (34) zu den Kreis- oder Ovalhähten vorgesehen sind.

16. Brustgeschirr nach Anspruch 12, **dadurch gekennzeichnet, dass** von der Außennaht (34) beginnend in etwa um eine halbe Teilung zwischen den benachbarten kreis- oder ovalförmigen Nähten (34, 33) nach innen verlaufend ein erster Abschnitt einer Verbindungsnaht (39b) vorgesehen ist und
- dass hiervon ausgehend eine zweite Anordnung mit einer äußeren Zwischennaht (35) parallel zu den vorher angelegten kreis- oder ovalförmigen Nähten (34, 33) vorgesehen ist, wobei diese zusätzliche Zwischennaht (35) in die gleiche Richtung oder in die entgegengesetzte Richtung zu den zuvor eingebrachten Nähten (31, 32, 33, 34)verläuft,
- dass auf Höhe und parallel zur vorhandenen Verbindungsnaht (39a) oder abgesetzt hiervon ein weiterer Abschnitt der Verbindungsnaht (39b) in den Zwischenraum der nächstfolgenden, benachbarten Nähte (33, 32) reichend eingebracht ist,
- dass in den Zwischenraum der nächstfolgenden, benachbarten Nähte (33, 32) eine zusätzliche Zwischennaht (36) von dem Ende der Verbindungsnaht (39b) ausgehend kreis- oder ovalförmig eingebracht ist und
- dass zwischen den nächstfolgenden beiden Nähten (32, 31) eine weitere Zwischennaht (37) nach Einbringung eines Abschnittes der Verbindungsnaht (39b) vorgesehen ist und
- dass davon ausgehend eine weitere kreis- oder ovalförmige Innennaht (38) angelegt ist, die über einen weiteren Abschnitt der Verbindungsnaht (39b) angekoppelt ist, wobei das Fadenende im Innenbereich der Verbindungsnaht zwischen dem inneren Nähkreis (Naht 38) und der nächstfolgenden (Naht 31) endet.

## Claims

1. Breast harness for animals, particularly for dogs, with at least one neck/breast strap (1) and a breast strap (2) extending behind the front legs and transversely over the breast bone, which neck/breast strap (1) is connected with the breast strap (2) by way of a connecting strap (3a, 3b) extending longitudinally over the breastbone and is fastened by the ends respectively in pairs to plate-shaped connecting elements (4, 5) with at least recesses (20, 21) respectively arranged one behind the other, wherein the ends of the neck/breast strap (1) are inserted in or at the front recesses (20) and the ends of the breast strap (2) are inserted in the rear recesses (21) and fastened thereat to be longitudinally adjustable or with loops and the plate-shaped connecting elements (4, 5) are connectible together at the back of the animal, **characterised in that** two connecting straps (3a, 3b) are provided to extend substantially on either side of the breastbone and longitudinally with respect thereto and are connected together by at least one upper and lower transversely extending cross connecting web (6, 7).

2. Breast harness according to claim 1, **characterised in that** a loop is provided at the lower cross connecting web (7) or lower loops (8a, 8b) are provided at the ends of the two connecting straps (3a, 3b), the breast strap (2) being displaceably mounted in the loop or loops.

3. Breast harness according to claim 1, **characterised in that** the upper cross connecting web (6) is made of strap material and has laterally two outwardly projecting ring eyes preferably of D-shape and that the neck/breast strap (1) is led through the ring eyes (9a, 9b).

4. Breast harness according to claim 1, **characterised in that** the neck/breast strap (1) and/or the breast strap (2) and/or the two connecting straps (3a, 3b) is or are constructed to be adjustable in length in the manner of a belt for trousers.

5. Breast harness according to claim 1 or 3, **characterised in that** spacer straps (10a, 10b), preferably provided with retaining loops (11 a, 11 b), are fastened to the upper cross connecting web (6) or to the ring eyes (9a, 9b) or to the neck/breast strap (1) laterally at the breast web (6), wherein longitudinal straps (13a, 13b) are fastened in or to the spacer straps or are drawn in by loops (12a, 12b), which longitudinal straps are displaceably or fixedly fastened by a further loop (14) to the breast strap (2) and have an eye or shackle (15) with eye (16) for fastening of a safety belt for fixing to fixing points at the motor vehicle seat, particularly to the back seat of a passenger motor vehicle.

6. Breast harness according to claim 5, **characterised in that** a longitudinal strap (13a, 13b) is provided at one side or both sides and selectably additionally fastened by a spacer belt (17) to at least one of the two plate-shaped connecting elements (4, 5).

7. Breast harness according to claim 4, **characterised in that** the adjusting devices of the neck/breast strap (1) and/or the breast strap (2) consist of deflecting means (18, 19) which end above the plate-shaped connecting elements (4, 5).

8. Breast harness according to claim 1, **characterised in that** the plate-shaped connecting elements (4, 5) are constructed as lock elements which are directly connectible together and which are detachably connected together by a plug, detent or locking or rotary lock fastener (23).

9. Breast harness according to claim 8, **characterised in that** the connecting elements (4, 5) are sheet metal parts or moulded parts of reinforced plastics material, wherein provided in one connecting element (5) is a longitudinal slot (24) for reception of an upright angled part at the other connecting element (4), in which a bearing hole for reception of a transverse pin (26) of the locking fastener (23) at the other connecting element (5) is provided, and that further passages or bores for fastening of dog leads or other straps are provided in the upright angled part.

10. Breast harness according to claim 1, **characterised in that** at least one lighting body or light reflector is mounted at least at one of the plate-shaped connecting elements (4, 5), wherein the lighting body is at least one signal lamp which can be switched on or a light-emitting diode, which delivers simultaneous or flashing light, and/or that light reflectors or lighting or reflecting bands are mounted at the straps and/or that a utensil container is fastened to at least one plate-shaped connecting element (4, 5).

11. Breast harness according to claim, 1, **characterised in that** a cushion element is placed below the connecting elements (4, 5) and fixed by at least one strap drawn through a slot and that a pocket body with one or more closable pockets is foldably fastened to the cushion, which pocket body can be placed over the connecting elements (4, 5) and fastened to the cushion element by means of flat zip fastener elements or other connecting parts, and/or that a cushion element protecting against pressure is placed around the two connecting straps (3a, 3b) and fixed by means of connecting parts, particularly flat zip fastener elements.

12. Breast harness according to any one of the preceding claims, **characterised in that** the straps and/or strap sections are for producing a firm connection between the straps or for connection of loops are connected together by seams (31, 32, 33, 34, 35, 36, 37, 38, 39, 40) which are formed to extend in circular, oval or spiral shape and have a defined number of parallel or spiral seam tracks.

13. Breast harness according to claim 12, **characterised in that** a further identical arrangement is inserted in a circular, oval or spiral arrangement in the intermediate spaces of the seams, wherein at least three circular or oval seam pairs are provided nested together.

14. Breast harness according to claim 12, **characterised in that** in the case of a spiral arrangement the seam (40) is placed to begin from the centre and the end of the outer seam runs continuously inwardly in radial direction of the spiral arrangement as a connecting seam.

15. Breast harness according to claim 12, **characterised in that** in the case of a circular or oval arrangement the seams (31, 32, 33, 34) are stitched in accordance with the following stitch pattern:
a) seam (31): disposed inwardly, stitched in circular or oval shape with joining connecting seam (39a), running outwardly in radial or lateral direction,
b) seam (32): running parallel to the first seam, wherein a connecting seam is provided in line with the first connecting seam (39a) or offset relative thereto to run outwardly,
c) seam (33): circular or oval seam, parallel to the first and second seams, with or without further connecting seam (39a), if further parallel seams (34) are provided relative to the circular or oval seams.

16. Breast harness according to claim 12, **characterised in that** a first section of a connecting seam (39b) is provided, starting from the outer seam (34), to run inwardly at approximately half the pitch between the adjacent circular or oval seams (34, 35) and
- starting therefrom a second arrangement with an outer intermediate seam (35) parallel to the previously placed circular or oval seams (34, 33) is provided, wherein this additional intermediate seam (35) runs in the same direction as or in the opposite direction to the previously introduced seams (31, 32, 33, 34),
- that a further section of the connecting seam (39b) is introduced at the height of and parallel to the existing connecting seam (39a) or offset therefrom to extend in the intermediate space of the succeeding adjacent seams (33, 32),
- that an additional intermediate seam (36) is introduced, starting from the end of the connecting seam (39b), in circular or oval shape into the intermediate space of the succeeding adjacent seams (33, 32) and
- a further intermediate seam (37) is provided between the succeeding two seams (32, 31) after introduction of a section of the connecting seam (39b) and
- that starting therefrom a further inner seam (38) of circular or oval shape, which is coupled by way of a further section of the connecting seam (39b), is placed in position, wherein the thread end ends in the inner region of the connecting seam between the inner seam circle (seam 38) and the succeeding one (seam 31).

## Revendications

1. Harnais thoracique pour animaux, en particulier pour des chiens, comprenant au moins une sangle de cou/thorax (1) et une sangle de thorax (2) s'étendant derrière les pattes antérieures transversalement au-dessus du sternum, ladite sangle de cou/thorax (1) étant reliée à la sangle de thorax (2) via une sangle de liaison (3a, 3b) qui s'étend longitudinalement au-dessus du sternum, et qui sont fixées avec les extrémités respectivement par paires à des éléments de liaison (4, 5) en forme de plaques avec au moins des évidements (20, 21) agencés respectivement l'un derrière l'autre, dans lequel les extrémités de la sangle de cou/thorax (1) sont enfilées dans ou au niveau des évidements antérieurs (20) et les extrémités de la sangle de thorax (2) sont enfilées dans les évidements postérieurs (21) et sont fixées à celles-ci avec possibilité de réglage en longueur ou avec des boucles, et les éléments de liaison en forme de plaques (4, 5) sont susceptibles d'être reliés l'un à l'autre sur le dos de l'animal,
**caractérisé en ce qu'**il est prévu deux sangles de liaison (3a, 3b) sensiblement des deux côtés du sternum et s'étendant longitudinalement par rapport à celui-ci, qui sont reliées l'une à l'autre par au moins une barrette de liaison transversale supérieure et une barrette de liaison transversale inférieure (6, 7).

2. Harnais thoracique selon la revendication 1, **caractérisé en ce que** sur la barrette de liaison transversale inférieure (7) est prévue une boucle, ou bien **en ce qu'**aux extrémités des deux sangles de liaison (3a, 3b) en bas sont prévues des boucles (8a, 8b) dans lesquelles la sangle thoracique (2) est montée avec possibilités de déplacement.

3. Harnais thoracique selon la revendication 1, **caractérisé en ce que** la barrette de liaison transversale supérieure (6) est réalisée en un matériau à sangle et comprend latéralement deux oeillets annulaires (9a, 9b) dépassant vers l'extérieur, de préférence conformés en forme de D, et **en ce que** la sangle de cou/thorax (1) est guidée à travers les oeillets annulaires (9a, 9b).

4. Harnais thoracique selon la revendication 1, **caractérisé en ce que** la sangle de cou/thorax (1) et/ou la sangle de thorax (2) et/ou les deux sangles de liaison (3a, 3b) sont réalisées de manière réglable en longueur à la manière d'une sangle de bretelles de pantalon.

5. Harnais thoracique selon la revendication 1 ou 3, **caractérisé en ce que** sur la barrette de liaison transversale supérieure (6) ou sur les oeillets annulaires (9a, 9b) ou sur la sangle de cou/thorax (1) et latéralement sur la barrette thoracique (6), sont fixées des sangles d'écartement (10a, 10b), de préférence pourvues de boucles de maintien (11a, 11b), en étant fixées dans ou sur leur sangle longitudinale (13a, 13b) ou rentrées avec des boucles (12a, 12b) qui sont fixées soit avec possibilités de déplacement au moyen d'une autre boucle (14) soit solidairement sur la sangle de thorax (2), et comprennent un oeillet ou une patte (15) avec un oeillet (16) pour la fixation d'une ceinture de sécurité destinée à être fixée sur des points fixes d'un siège de véhicule automobile, en particulier sur le siège arrière d'un véhicule automobile.

6. Harnais thoracique selon la revendication 5, **caractérisé en ce qu'**il est prévu une sangle longitudinale (13, 13b) d'un côté ou des deux côtés, qui sont fixées au choix additionnellement par une sangle d'écartement (17) à l'un au moins des deux éléments de liaison (4, 5) en forme de plaques.

7. Harnais thoracique selon la revendication 4, **caractérisé en ce que** les systèmes de réglage de la sangle de cou/thorax (1) et/ou de la sangle de thorax (2) sont constitués par des organes de renvoi (18, 19) qui se terminent au-dessus des éléments de liaison en forme de plaques (4, 5).

8. Harnais thoracique selon la revendication 1, **caractérisé en ce que** les éléments de liaison en forme de plaques (4, 5) sont réalisés sous la forme d'éléments de serrure susceptibles d'être reliés directement l'un à l'autre, qui sont reliés l'un à l'autre de façon détachable par une fermeture (23) à enfichage, à enclenchement ou une fermeture à verrou ou à verrou rotatif.

9. Harnais thoracique selon la revendication 8, **caractérisé en ce que** les éléments de liaison (4, 5) sont des pièces en tôle ou des pièces moulées en matière plastique renforcée, dans lequel, dans un élément de liaison (5) il est prévu une fente longitudinale (24) pour recevoir une pièce en équerre dressée vers le haut sur l'autre élément de liaison (4), dans laquelle est prévu un trou de montage pour recevoir un goujon transversal (26) de la fermeture à verrou (23) sur l'autre élément de liaison (5), et **en ce que** dans la pièce en équerre dressée vers le haut il est prévu d'autres traversées ou d'autres perçages pour la fixation de laisses de chiens ou d'autres sangles.

10. Harnais thoracique selon la revendication 1, **caractérisé en ce que** sur au moins un des éléments de liaison en forme de plaques (4, 5) est monté au moins un moyen d'éclairage ou un réflecteur de lumière, le moyen d'éclairage étant au moins une lampe de signalisation ou une diode électroluminescente susceptible d'être mise en marche, qui fournit simultanément ou de manière clignotante une lumière et/ou **en ce que** des bandes luminescentes ou réfléchissantes ou des réflecteurs de lumière sont monté(e)s sur les sangles, et/ou un récipient à ustensiles est fixé sur au moins un élément de liaison en forme de plaque (4, 5).

11. Harnais thoracique selon la revendication 1, **caractérisé en ce qu'**un élément de rembourrage est posé au-dessous des éléments de liaison (4, 5) et est fixé par au moins une sangle passée à travers une fente, et **en ce qu'**un élément à poches, qui comprend une ou plusieurs poches susceptibles d'être fermées, est fixé de façon rabattable sur le rembourrage, ledit élément à poche pouvant être posé au-dessus des éléments de liaison (4, 5) et pouvant être fixé au moyen d'éléments de fermeture agrippante surfacique ou d'autres éléments de liaison sur l'élément de rembourrage, et/ou **en ce qu'**un élément de rembourrage assurant une protection vis-à-vis de la pression est posé autour des deux sangles de liaison (3a, 3b), et est fixé au moyen de pièces de liaison, en particulier d'éléments de fermeture agrippante surfacique.

12. Harnais thoracique selon l'une des revendications précédentes, **caractérisé en ce que** les sangles et/ou les tronçons de sangle sont reliés les un(e)s aux autres par des coutures (31, 32, 33, 34, 35, 36, 37, 38, 40) pour établir une liaison ferme entre les sangles ou pour réaliser des boucles, lesdites coutures étant réalisées de manière à s'étendre sous forme de cercle, d'ovale ou de spirale, et présentent un certain nombre de lignes de couture parallèles ou de forme spiralée.

13. Harnais thoracique selon la revendication 12, **caractérisé en ce que**, dans un agencement de forme circulaire, ovale ou spiralée, est inséré un autre agencement de même forme dans les intervalles entre les coutures, et il est prévu au moins deux paires de coutures de forme circulaire ou ovale, imbriquées l'une dans l'autre.

14. Harnais thoracique selon la revendication 12, **caractérisé en ce que** dans le cas d'un agencement de forme spiralée, la couture (40) est réalisée en partant du centre, et l'extrémité de la couture extérieure s'étend, à titre de couture de liaison, en direction radiale et en traversant l'agencement spiralé vers l'intérieur.

15. Harnais thoracique selon la revendication 12, **caractérisé en ce que** dans le cas d'un agencement de forme circulaire ou ovale, les coutures (31, 32, 33, 34) sont cousues d'après le motif de couture suivant :
a) couture (31) : située à l'intérieur, cousue sous forme circulaire ou ovale avec une couture de liaison successive (39a) qui s'étend vers l'extérieur en direction radiale ou latérale,
b) couture (32) : s'étend parallèlement à la première couture, et une couture de liaison est prévue en série par rapport à la première couture de liaison (39a) ou de manière à s'étendre vers l'extérieur en décalage par rapport à celle-ci, et
c) couture (33) : couture de forme circulaire ou ovale, parallèle à la première et à la seconde couture, sans ou avec couture de liaison supplémentaire (39a), dans le cas où d'autres coutures parallèles (34) sont prévues par rapport aux coutures circulaires ou ovales.

16. Harnais thoracique selon la revendication 12, **caractérisé en ce que**, en commençant depuis la couture extérieure (34) et approximativement à la moitié de la séparation entre les coutures voisines de forme circulaire ou ovale (34, 33), il est prévu un premier tronçon d'une couture de liaison (39b) qui s'étend vers l'intérieur, et
- partant de celle-ci, il est prévu un second agencement avec une couture intermédiaire extérieure (35) parallèlement aux coutures de forme circulaire ou ovale (34, 33) réalisées auparavant, cette couture intermédiaire supplémentaire (35) s'étendant dans la même direction ou dans une direction opposée aux coutures (31, 32, 33, 34) réalisées auparavant,
- à la hauteur de la couture de liaison existante (39a) et parallèlement à celle-ci, ou en décalage de celle-ci, il est prévu un autre tronçon de la couture de liaison (39b) réalisé de manière à s'étendre jusque dans l'intervalle des coutures successives voisines (33, 32),
- dans l'intervalle des coutures successives voisines (33, 32) est réalisée une couture intermédiaire supplémentaire (36), de forme circulaire ou ovale, partant de l'extrémité de la couture de liaison (39b), et
- entre les deux coutures successives (32, 31) il est prévu une autre couture intermédiaire (37) après réalisation d'un tronçon de la couture de liaison (39b), et
- partant de celle-ci, une autre couture intérieure (39) de forme circulaire ou ovale est réalisée, couplée via un autre tronçon de la couture de liaison (39b), et l'extrémité du fil se termine dans la zone intérieure de la couture de liaison entre le cercle de couture intérieur (couture 38) et la couture suivante (couture 31).
